# EUROPEAN PATENT APPLICATION

(11) **EP 4 468 552 A1**
(43) Date of publication of application: **27.11.2024**
(21) Application number: 23752986.2
(22) Date of filing: 14.02.2023
(51) Int. Cl.: H02J 7/00, H02J 7/02, H02J 7/04

(54) **CHARGING ADAPTER, CHARGER, AND METHOD FOR CHARGING BATTERY PACK**

(30) Priority: 14.02.2022 JP 2022020645
(71) Applicant: Makita Corporation, Anjo-shi Aichi 446-8502 (JP)
(72) Inventor: SAKAI, Mamoru, Anjo-shi, Aichi 446-8502 (JP); MIZUTANI, Masaya, Anjo-shi, Aichi 446-8502 (JP); ITO, Makoto, Anjo-shi, Aichi 446-8502 (JP)
(74) Representative: Kramer Barske Schmidtchen Patentanwälte PartG mbB
(86) International application number: PCT/JP2023/005029
(87) International publication number: WO 2023/153524

(57) **Abstract**

A charging adapter in one aspect of the present disclosure includes a first coupler, a second coupler, a power delivery path, an arithmetic circuit, and a transmission circuit. The first coupler is detachably coupled to a power delivery adapter. The power delivery adapter outputs a DC voltage. The second coupler is detachably coupled to a battery pack. The power delivery path electrically couples the first coupler to the second coupler. The arithmetic circuit calculates a control parameter of the power delivery adapter based on a state of the battery pack coupled to the second coupler. The transmission circuit transmits the calculated control parameter to the power delivery adapter through the first coupler.

## Description

### CROSS-REFERENCE TO RELATED APPLICATION

This international application claims the benefit of Japanese Patent Application No. 2022-020645 filed on February 14, 2022, with the Japan Patent Office, and the entire disclosure of Japanese Patent Application No. 2022-020645 is incorporated herein by reference.

### TECHNICAL FIELD

The present disclosure relates to the charging of a battery pack.

### BACKGROUND ART

The Patent Document 1 identified below discloses a charger configured to output a specified fixed DC voltage to charge a battery pack. This charger can charge the battery pack compatible with this fixed DC voltage.

### PRIOR ART DOCUMENT

### PATENT DOCUMENT

Patent Document 1: Japanese Unexamined Patent Application Publication No. 2011-160551

### SUMMARY OF THE INVENTION

### PROBLEMS TO BE SOLVED BY THE INVENTION

The above-mentioned charger includes an adapter portion that outputs the DC voltage, and a battery pack coupler that is detachably coupled to the battery pack. The battery pack coupler outputs, to the battery pack, the DC voltage received from the adapter portion. In the battery pack coupler, a shape of its part to be coupled to battery packs is compatible with to-be-coupled battery packs.

In order to charge two or more types of battery packs having distinct coupler shapes using the charger, it is conceivable to equip the charger with two or more types of battery pack couplers each having a distinct shape in the part to be coupled to the battery pack.

However, the DC voltage output from the charger is fixed. Therefore, the charger can only charge battery packs having a rated voltage corresponding to this DC voltage.

Generally, in order to charge two or more types of battery packs having distinct rated voltages using a single charger, a charging adapter that is detachably coupled to a battery pack is equipped with a voltage converter to convert (i.e., step-up or step-down) the output voltage into the voltage corresponding to each type of battery packs. When the charging adapter is equipped with the voltage converter in this manner, the charging adapter can become larger.

It is desirable that one aspect of the present disclosure can charge two or more types of battery packs having distinct rated voltages while reducing the increase in the size of the charging adapter.

### MEANS FOR SOLVING THE PROBLEMS

One aspect of the present disclosure provides a charging adapter including a first coupler, a second coupler, a power delivery path, an arithmetic circuit, and a transmission circuit. The first coupler is detachably coupled to a power delivery adapter. The power delivery adapter outputs a DC voltage. The second coupler is detachably coupled to a battery pack. The battery pack is configured to be detachably coupled to a job-site electric appliance. The power delivery path is configured to electrically couple the first coupler to the second coupler.

The arithmetic circuit calculates a control parameter of the power delivery adapter based on a state of the battery pack coupled to the second coupler. The transmission circuit transmits the calculated control parameter to the power delivery adapter through the first coupler.

Such a charging adapter can adjust, without providing a voltage converter in the charging adapter, a magnitude of the DC voltage for two or more types of battery packs that requires distinct magnitudes of voltage for charging. Therefore, this charging adapter can charge two or more types of battery packs having distinct rated voltages while reducing the increase in the size of the charging adapter.

Another aspect of the present disclosure provides a charger including a power delivery adapter in addition to the charging adapter. The power delivery adapter is detachably coupled to the charging adapter. The power delivery adapter outputs the DC voltage corresponding to the control parameter transmitted from the charging adapter.

Such a charger can charge two or more types of battery packs having distinct rated voltages while reducing the increase in the size of the charging adapter.

Still another aspect of the present disclosure provides a method for charging a battery pack. This method includes:
electrically coupling the battery pack to a power delivery adapter through a charging adapter, the battery pack being configured to be detachably coupled to a job-site electric appliance;
transmitting, from the charging adapter to the power delivery adapter, a control parameter based on a state of the battery pack; and
delivering, from the power delivery adapter through the charging adapter to the battery pack, a DC voltage based on the control parameter.

In this method, it is possible to charge two or more types of battery packs having distinct rated voltages while reducing the increase in the size of the charging adapter.

### BRIEF DESCRIPTION OF THE DRAWINGS

FIG. 1 is a block diagram showing the overall configuration of a charger in a first embodiment.
FIG. 2 shows a part of a flowchart of a charging process.
FIG. 3 shows the rest of the flowchart of the charging process.

### EXPLANATION OF REFERENCE NUMERALS

1...charger, 3...power delivery adapter, 5...charging adapter, 8...battery pack, 33...electric power outputter, 35...AC/DC converter, 36...power delivery control integrated circuit (power delivery control IC), 52...adapter coupler, 53...battery coupler, 54...notifier, 61...first switch, 62... second switch, 63...charging control integrated circuit (charging control IC), 64...control power supply, 68...microcontroller unit (MCU), 69...load switch, 70...first battery interface, 83a...first battery cell, 83b...second battery cell, L1...first power delivery path, L2... second power delivery path, L3... third power delivery path

### MODE FOR CARRYING OUT THE INVENTION

### 1. Overview of Embodiments

One embodiment may provide a charging adapter including at least any one of the following features 1 through 6:
- Feature 1: a first coupler configured to be detachably coupled to a power delivery adapter;
- Feature 2: the power delivery adapter is configured to output a DC voltage;
- Feature 3: a second coupler configured to be detachably coupled to a battery pack;
- Feature 4: a power delivery path configured to electrically couple the first coupler to the second coupler;
- Feature 5: an arithmetic circuit configured to calculate a control parameter of the power delivery adapter based on a state of the battery pack coupled to the second coupler; and
- Feature 6: a transmission circuit configured to transmit, to the power delivery adapter through the first coupler, the control parameter calculated.

The charging adapter including at least the features 1 through 6 can adjust, without providing a voltage converter in the charging adapter, a magnitude of the DC voltage for two or more types of battery packs that requires distinct magnitudes of voltage for charging. Thus, this charging adapter can reduce a burden on a user in preparing chargers at the time of charging two or more types of battery packs. Furthermore, when the state of the battery pack has changed, this charging adapter can appropriately charge the battery pack with a DC voltage corresponding to the change in the state of the battery pack.

One embodiment may include, in addition to or in place of at least any one of the features 1 through 6, the following feature 7:
- Feature 7: the control parameter indicates a magnitude of the DC voltage and/or a magnitude of a current to be output from the power delivery adapter.

The charging adapter including at least the features 1 through 7 can control the magnitude of the DC voltage and/or the magnitude of the current to be delivered to the battery pack in accordance with the type of the battery pack.

One embodiment may include, in addition to or in place of at least any one of the features 1 through 7, at least any one of the following features 8 through 12:
- Feature 8: a path switch (i) on the power delivery path and (ii) configured to be switched to its conductive state or its interrupted state;
- Feature 9: the path switch in its conductive state is configured to complete the power delivery path;
- Feature 10: the path switch in its interrupted state is configured to interrupt the power delivery path;
- Feature 11: a switching control circuit configured to switch the path switch to its conductive state based on the power delivery adapter coupled to the first coupler being compatible with the battery pack coupled to the second coupler; and
- Feature 12: a switching control circuit configured to switch the path switch to its interrupted state based on the power delivery adapter coupled to the first coupler being incompatible with the battery pack coupled to the second coupler.

The charging adapter including at least the features 1 through 6 and 8 through 12 can inhibit the battery pack from being improperly charged, and thus, can inhibit the battery pack from being damaged, when the power delivery adapter is not suitable for charging the battery pack.

One embodiment may include, in addition to or in place of at least any one of the features 1 through 12, at least any one of the following features 13 through 23:
- Feature 13: a control power supply configured to convert the DC voltage into an internal voltage to be delivered to an inside (or an internal circuit) of the charging adapter;
- Feature 14: a first switch (i) between the first coupler and the path switch on the power delivery path and (ii) configured to be switched to its conductive state or its interrupted state;
- Feature 15: the first switch in its conductive state is configured to complete the power delivery path;
- Feature 16: the first switch in its interrupted state is configured to interrupt the power delivery path;
- Feature 17: a first internal path configured to electrically couple the power delivery path to the control power supply;
- Feature 18: the first internal path is electrically coupled between the first switch and the path switch on the power delivery path;
- Feature 19: a second internal path configured to electrically couple the first coupler to the control power supply;
- Feature 20: a second switch (i) on the second internal path and (ii) configured to be switched to its conductive state or its interrupted state;
- Feature 21: the second switch in its conductive state is configured to complete the second internal path;
- Feature 22: the second switch in its interrupted state is configured to interrupt the second internal path; and
- Feature 23: a starter circuit configured to switch the first switch or the second switch to its conductive state based on the first coupler being coupled to the power delivery adapter.

The charging adapter including at least the features 1 through 6 and 8 through 23 can deliver the DC voltage to the path switch and to the control power supply by switching the first switch or the second switch to its conductive state.

In one embodiment, the first internal path may deliver the DC voltage from the power delivery path to the control power supply.

In one embodiment, the power delivery path may include a node between the first switch and the path switch.

In one embodiment, the first internal path may be electrically coupled to the node of the power delivery path.

In one embodiment, the second internal path may deliver the DC voltage from the first coupler to the control power supply.

In one embodiment, the starter circuit may receive the DC voltage to operate while the first coupler is coupled to the power delivery adapter.

One embodiment may include, in addition to or in place of at least any one of the features 1 through 23, at least any one of the following features 24 and 25:
- Feature 24: the starter circuit is configured to switch the first switch to its conductive state and switch the second switch to its interrupted state based on the power delivery adapter being compatible with the charging adapter; and
- Feature 25: the starter circuit is configured to switch the first switch to its interrupted state and switch the second switch to its conductive state based on the power delivery adapter being incompatible with the charging adapter.

The charging adapter including at least the features 1 through 6 and 8 through 25 delivers the DC voltage to both the path switch and the control power supply in response to the power delivery adapter being compatible with the charging adapter. This charging adapter delivers the DC voltage to the control power supply without delivering the DC voltage to the path switch in response to the power delivery adapter being incompatible with the charging adapter. In such a charging adapter, when the DC voltage is inappropriate, an electric power can be delivered to the inside of the charging adapter by the control power supply while damage to the charging adapter caused by the inappropriate DC voltage can be inhibited.

One embodiment may include, in addition to or in place of at least any one of the features 1 through 25, the following feature 26:
- Feature 26: the switching control circuit is configured to switch the path switch to its interrupted state based on a first condition being satisfied.

The charging adapter including at least the features 1 through 6, 8 through 12, and 26 can inhibit the battery pack from being damaged due to continuous output of the DC voltage to the battery pack.

One embodiment may include, in addition to or in place of at least any one of the features 1 through 26, the following feature 27:
- Feature 27: the first condition is satisfied in response to (i) the battery pack having been charged to 100% of a charging capacity of the battery pack, (ii) the battery pack being unchargeable, or (iii) the battery pack not being coupled to the second coupler.

The charging adapter including at least the features 1 through 6, 8 through 12, 26, and 27 can stop outputting the DC voltage in response to the charging of the battery pack being completed. Alternatively, such a charging adapter can stop outputting the DC voltage in response to the battery pack being anomalous (or faulty). Alternatively, such a charging adapter can stop outputting the DC voltage in response to the battery pack being detached from the second coupler.

One embodiment may include, in addition to or in place of at least any one of the features 1 through 27, the following features 28 through 30:
- Feature 28: the power delivery adapter is configured to select a magnitude of the DC voltage;
- Feature 29: the arithmetic circuit is configured to calculate the control parameter to maintain the DC voltage at a first voltage based on the first condition being satisfied; and
- Feature 30: the first voltage corresponds to a minimum operating voltage of the arithmetic circuit or a minimum DC voltage selectable in the power delivery adapter.

The charging adapter including at least the features 1 through 6, 8 through 12, 26, and 28 through 30 can cause the DC voltage to reach and maintain the first voltage in response to the first condition being satisfied.

One embodiment may include, in addition to or in place of at least any one of the features 1 through 30, the following feature 31:
- Feature 31: the first voltage corresponds to a higher voltage between the minimum operating voltage and the minimum DC voltage.

The charging adapter including at least the features 1 through 6, 8 through 12, 26, and 28 through 31 can reduce unnecessary power consumption while maintaining the operation of the arithmetic circuit in response to the first condition being satisfied.

One embodiment may include, in addition to or in place of at least any one of the features 1 through 31, the following feature 32:
- Feature 32: the arithmetic circuit is configured to vary the control parameter based on (i) the charging adapter delivering the DC voltage to the battery pack and (ii) the state of the battery pack having changed.

The charging adapter including at least the features 1 through 6, and 32 can vary the DC voltage to be delivered to the battery pack in response to the state of the battery pack having changed. Such a charging adapter can control the magnitude of the DC voltage within an appropriate range to thereby reduce unnecessary power consumption in charging the battery pack.

One embodiment may include, in addition to or in place of at least any one of the features 1 through 32, the following feature 33:
- Feature 33: the first coupler is configured to receive the DC voltage in accordance with a Universal Serial Bus-Power Delivery (USB-PD) standard.

The charging adapter including at least the features 1 through 6, and 33 can control the DC voltage in accordance with the USB-PD standard. The USB is a registered trademark.

One embodiment may include, in addition to or in place of at least any one of the features 1 through 33, the following feature 34:
- Feature 34: the first coupler is in the form of a USB Type-C connector configured to receive the DC voltage.

The charging adapter including at least the features 1 through 6, and 34 can control the DC voltage through the USB Type-C connector. Examples of the USB Type-C connector include a USB Type-C port, a USB Type-C plug, a USB Type-C receptacle, a male connector, and a female connector. The USB Type-C connector may be coupled to other devices through a cable, or may be directly coupled to other devices without a cable.

One embodiment may include, in addition to or in place of at least any one of the features 1 through 34, the following feature 35:
- Feature 35: the battery pack includes an output terminal configured to transmit information of the battery pack to the j ob-site electric appliance coupled to the battery pack.

Such a battery pack can have a distinct output voltage in accordance with the type/model of the job-site electric appliance. The charging adapter including at least the features 1 through 6, and 35 can charge two or more types of battery packs having distinct output voltages. Therefore, such a charging adapter can reduce the burden on the user in preparing for a charger and/or the charging adapter at the time of charging the two or more types of battery packs. The transmission of the information through the output terminal may be in a digital format or an analog format. The digital format may include a serial format and a parallel format. In the digital format, the information of the battery pack may be transmitted in the form of a digital value based on a specified communication protocol. In the analog format, the information of the battery pack may be transmitted in the form of an analog value. Examples of the analog value include a voltage value and an electric current value.

One embodiment may include, in addition to or in place of at least any one of the features 1 through 35, at least any one of the following features 36 through 38:
- Feature 36: the arithmetic circuit is configured to calculate the control parameter so as to maintain the DC voltage at a minimum DC voltage selectable in the power delivery adapter, based on a second condition being satisfied;
- Feature 37: the minimum DC voltage is lower than a minimum operating voltage of the arithmetic circuit; and
- Feature 38: the second condition is satisfied in response to the power delivery adapter being incompatible with the charging adapter or the battery pack being unchargeable.

The charging adapter including at least the features 1 through 6, 28, and 36 through 38 disables the arithmetic circuit in response to the second condition being satisfied. Such a charging adapter can reduce an anomalous operation of the arithmetic circuit, and thus, inhibit the charging of a battery pack that is incompatible with the power delivery adapter.

One embodiment may include, in addition to or in place of at least any one of the features 1 through 38, the following feature 39:
- Feature 39: a state monitoring circuit configured to monitor the state of the battery pack.

The charging adapter including at least the features 1 through 6, and 39 can monitor the state of the battery pack.

One embodiment may include, in addition to or in place of at least any one of the features 1 through 39, the following feature 40:
- Feature 40: the battery pack includes a first battery cell and a second battery cell coupled in series or in parallel with each other.

In one embodiment, the transmission circuit may be configured to transmit the control parameter to the power delivery adapter in accordance with any standard for delivering an electric power through a USB.

In one embodiment, the first coupler may receive the DC voltage in accordance with the standard. Examples of the standard include any standard in which the DC voltage output from the power delivery adapter can be varied by the charging adapter.

One embodiment may provide a charger including at least any one of the following features 41 and 42:
- Feature 41: a charging adapter including at least any one of the features 1 through 40; and
- Feature 42: a power delivery adapter configured (i) to be detachably coupled to the charging adapter and (ii) to output the DC voltage corresponding to the control parameter transmitted from the charging adapter.

The charger including at least the features 41 and 42 can output a DC voltage corresponding to two or more voltage values and/or two or more electric current values required for charging two or more types of battery packs. Therefore, such a charger can charge the two or more types of battery packs. In addition, when the state of the battery pack has changed, this charger can appropriately charge the battery pack with a DC voltage corresponding to the change.

One embodiment may include, in addition to or in place of at least any one of the features 41 and 42, at least any one of the following features 43 through 45:
- Feature 43: the power delivery adapter includes a voltage generation circuit configured to generate the DC voltage;
- Feature 44: the power delivery adapter includes a power delivery control circuit configured (i) to receive the control parameter from the charging adapter and (ii) to control the voltage generation circuit so as to generate the DC voltage corresponding to the control parameter; and
- Feature 45: the power delivery adapter includes a voltage output circuit configured (i) to be detachably coupled to the first coupler of the charging adapter and (ii) to output the DC voltage to the first coupler.

In the charger including at least the features 41 through 45, the magnitude of the DC voltage of the power delivery adapter can be set corresponding to the control parameter from the charging adapter. Such a charger can adjust the magnitude of the DC voltage according to two or more types of battery packs to thereby charge the two or more types of battery packs.

In one embodiment, the arithmetic circuit, the transmission circuit, the switching control circuit, the starter circuit and/or the power delivery control circuit may include a microcomputer, or may include, in place of or in addition to the microcomputer, a combination of electronic components such as discrete devices, an Application Specified Integrated Circuit (ASIC), an Application Specific Standard Product (ASSP), a programmable logic device such as a Field Programmable Gate Array (FPGA), or a combination thereof.

One embodiment may provide a method for charging a battery pack, and the method may include at least any one of the following features 46 through 48:
- Feature 46: electrically coupling the battery pack to a power delivery adapter through a charging adapter;
- Feature 47: transmitting, from the charging adapter to the power delivery adapter, a control parameter based on a state of the battery pack; and
- Feature 48: delivering, from the power delivery adapter through the charging adapter to the battery pack, a DC voltage based on the control parameter.

The method including at least the features 46 through 48 enables to output a DC voltage corresponding to two or more types of battery packs, and thus, enables to charge the two or more types of battery packs.

In one embodiment, in addition to at least one of the at least features 1 through 48, the battery pack may be configured to be detachably coupled to a job-site electric appliance.

Examples of the job-site electric appliance include any types of electric appliances that are used at job sites, for example, of do-it-yourself carpentry, manufacturing, gardening, and construction. Specifically, examples of the job-site electric appliance include any electric power tool for masonry work, metalworking, or woodworking, any electric gardening equipment, and electric appliances for preparing an environment of a job site. More specifically, examples of the job-site electric appliance include an electric blower, an electric hammer, an electric hammer drill, an electric drill, an electric driver, an electric wrench, an electric grinder, an electric circular saw, an electric reciprocating saw, an electric jig saw, an electric cutter, an electric chain saw, an electric planer, an electric nailer (including a tacker), an electric hedge trimmer, an electric lawn mower, an electric lawn trimmer, an electric bush cutter, an electric cleaner, an electric sprayer, an electric spreader, an electric dust collector, a laser range finder (or a laser distance measuring equipment), a laser marking device, a beam receiver of a laser marking device, a wall scanner, a radio, a television, a speaker, an electric hot/cool storage, an electric kettle, a coffee machine (or a coffee maker or a coffee distiller), a battery-operated wheel barrow, a battery-operated bicycle, a fan best, and a heating jacket.

In one embodiment, the features 1 through 48 may be combined in any combination.

In one embodiment, any of the features 1 through 48 may be excluded.

### 2. Specific Example Embodiments

Hereinafter, specific example embodiments of the present disclosure are described with reference to the drawings.

### 2-1. First Embodiment

### 2-1-1. Overall Configuration

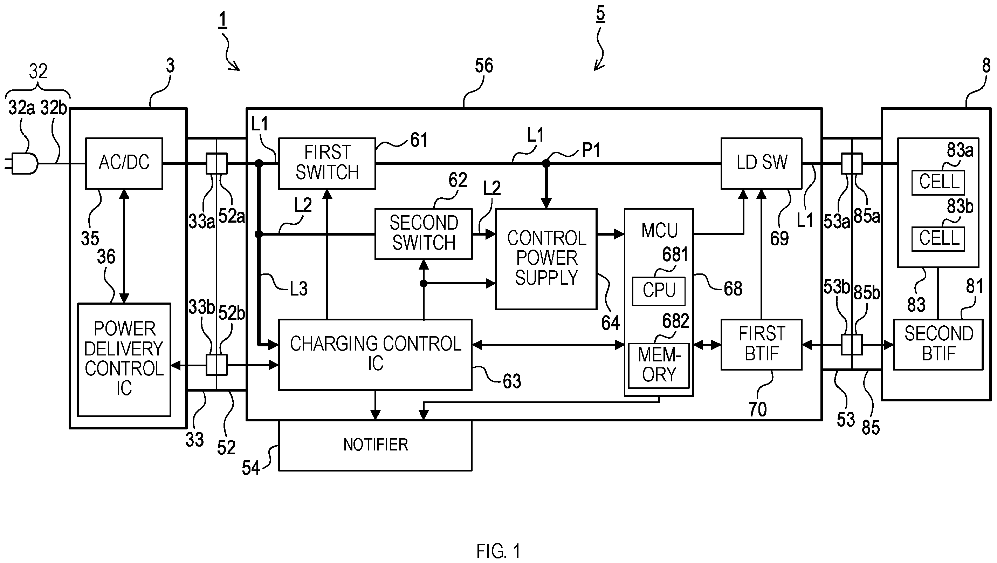

As shown in FIG. 1, a charger 1 of a first embodiment is configured to charge a battery pack 8. The charger 1 includes a power delivery adapter 3 and a charging adapter 5.

The power delivery adapter 3 is configured to be detachably coupled to the charging adapter 5.

The battery pack 8 is configured to be detachably coupled to a job-site electric appliance that is not shown. The battery pack 8 is configured to deliver DC power to the job-site electric appliance. The battery pack 8 may include a specific attach/detach structure and a terminal shape depending on the type of job-site electric appliance to be coupled. The job-site electric appliance in the first embodiment may be an electric drill, for example.

### 2-1-2. Power Delivery Adapter

The power delivery adapter 3 includes an electric power inputter 32, an electric power outputter 33, an AC/DC converter 35, and a power delivery control integrated circuit (IC) 36.

The electric power inputter 32 includes an AC plug 32a and a cable 32b. The AC plug 32a is configured to be capable of coupling to an AC power supply that is not shown. The cable 32b is configured to transmit a first electric power PW1 delivered from the AC power supply. The first electric power PW1 is AC power including an AC voltage and an AC current. That is, the electric power inputter 32 is configured to receive the first electric power PW1 from the AC power supply. The AC power supply may be a commercial power supply. For example, the first electric power PW1 may be 100-volt AC power.

The electric power outputter 33 is configured to output a second electric power PW2 described below. The second electric power PW2 is DC power including a DC voltage and a DC current. The electric power outputter 33 is configured to be detachably coupled to the charging adapter 5. The electric power outputter 33 includes an electric power terminal 33a and a signal terminal 33b. The electric power terminal 33a is electrically coupled to the AC/DC converter 35. The signal terminal 33b is electrically coupled to the power delivery control IC 36. The electric power outputter 33 conforms to any standard for delivering electric power through a USB connector, and may be a USB Type-C connector, for example, in accordance with the Universal Serial Bus-Power Delivery (USB-PD) standard (USB is a registered trademark). The USB Type-C connector may include a CC terminal that is not shown. The USB Type-C connector may be any of a USB Type-C port, a USB Type-C plug, or a USB Type-C receptacle.

The AC/DC converter 35 receives the first electric power PW1. The AC/DC converter 35 converts the first electric power PW1 into the second electric power PW2. The second electric power PW2 is output to the charging adapter 5 through the electric power outputter 33.

The power delivery control IC 36 at least achieves a function as the source side in the USB-PD standard. The power delivery control IC 36 performs a negotiation with a device coupled to the electric power outputter 33 in accordance with the USB-PD standard. When the electric power outputter 33 is coupled to the charging adapter 5, the power delivery control IC 36 performs the negotiation with the charging adapter 5.

The power delivery control IC 36 determines a supplied power to the charging adapter 5 through the negotiation. The power delivery control IC 36 sets an output voltage of the AC/DC converter 35 (i.e., the voltage of the second electric power PW2) in accordance with the determined supply power. The voltage value of the second electric power PW2 corresponds to a power-supply voltage value of the charging adapter 5. The power-supply voltage of the charging adapter 5 corresponds to a voltage required for the charging adapter 5 to operate. Note that the voltage value of the second electric power PW2 before the negotiation is set to a default value. The default value here is the lowest voltage (e.g., 5 volts) among the selectable voltages defined in the USB-PD standard.

The power delivery adapter 3 is configured to output the second electric power PW2 corresponding to a control value (a control value Pc of the second electric power PW2 described below) based on information (a charging setting information Si described below) transmitted from the charging adapter 5.

### 2-1-3. Charging Adapter

The charging adapter 5 includes an adapter coupler 52, a battery coupler 53, a notifier 54, and a circuit section 56.

The adapter coupler 52 is configured to be detachably coupled to the electric power outputter 33 of the power delivery adapter 3. The adapter coupler 52 is configured to receive the second electric power PW2 output from the power delivery adapter 3. The adapter coupler 52 includes a first adapter terminal 52a and a second adapter terminal 52b. In response to the adapter coupler 52 being coupled to the electric power outputter 33, the first adapter terminal 52a is electrically coupled to the electric power terminal 33a, and the second adapter terminal 52b is electrically coupled to the signal terminal 33b. The adapter coupler 52 may be, for example, a USB Type-C connector in accordance with the USB-PD standard. The USB Type-C connector may include a CC terminal that is not shown.

The battery coupler 53 is configured to be detachably coupled to the battery pack 8. The battery coupler 53 is configured to deliver the voltage of the second electric power PW2 received at the adapter coupler 52 to the battery pack 8 as it is without converting the voltage. In other words, the battery coupler 53 outputs the voltage of the second electric power PW2 received at the adapter coupler 52 to the battery pack 8 as it is without converting the voltage. The battery coupler 53 includes a first connection terminal 53a and a second connection terminal 53b.

The circuit section 56 includes a first switch (SW) 61, a second SW 62, a charging control integrated circuit (IC) 63, and a control power supply 64. In addition, the circuit section 56 includes a microcontroller unit (MCU) 68, a load switch (LDSW) 69, and a first battery interface (BTIF) 70. In addition, the circuit section 56 includes a first power delivery path L1, a second power delivery path L2, and a third power delivery path L3.

The first power delivery path L1, the second power delivery path L2, and the third power delivery path L3 are each electrically coupled to the first adapter terminal 52a. The charging control IC 63 is electrically coupled to the second adapter terminal 52b. The first power delivery path L1 is electrically coupled to the first connection terminal 53a. The first BTIF 70 is electrically coupled to the second connection terminal 53b.

The first power delivery path L1 includes an electrical path extending from the adapter coupler 52 through the first SW 61 and the LDSW 69 to the battery coupler 53. The first power delivery path L1 electrically couples the adapter coupler 52 to the battery coupler 53. In other words, the first power delivery path L1 electrically couples the adapter coupler 52 to the battery coupler 53 such that the DC voltage of the second electric power PW2, which is received from the power delivery adapter 3 through the adapter coupler 52, is transmitted to the battery pack 8 through the battery coupler 53. The first power delivery path L1 includes an electrical path branching from a node P1 between the first SW 61 and the LDSW 69 to the control power supply 64. This electrical path electrically couples the adapter coupler 52 to the control power supply 64.

The first SW 61 is disposed on the first power delivery path L1 and completes or interrupts the first power delivery path L1 when turned ON or OFF in accordance with a command from the charging control IC 63. In detail, in response to the first SW 61 turned ON, the adapter coupler 52 is electrically coupled to each of the LDSW 69 and the control power supply 64 through the first power delivery path L1. In response to the first SW 61 turned OFF, the adapter coupler 52 is electrically decoupled from each of the LDSW 69 and the control power supply 64 on the first power delivery path L1.

The LDSW 69 is disposed on the first power delivery path L1 and switched to ON (i.e., its conductive state) or OFF (i.e., its interrupted state). The LDSW 69 completes or interrupts the first power delivery path L1 in response to the LDSW 69 turned ON or OFF in accordance with a command from the MCU 68. In detail, in response to the LDSW 69 turned ON, the first SW 61 is electrically coupled to the battery coupler 53 through the first power delivery path L1. In response to the LDSW 69 turned OFF, the first SW 61 is electrically decoupled from the battery coupler 53.

The second power delivery path L2 is an electrical path configured to electrically couple the adapter coupler 52 and the control power supply 64 to each other. The second SW 62 is disposed on the second power delivery path L2 and completes or interrupts the second power delivery path L2 in response to the second SW 62 turned ON or OFF in accordance with a command from the charging control IC 63. In detail, in response to the second SW 62 turned ON, the adapter coupler 52 is electrically coupled to the control power supply 64 through the second power delivery path L2. In response to the second SW 62 turned OFF, the adapter coupler 52 is electrically decoupled from the control power supply 64 on the second power delivery path L2.

The third power delivery path L3 is an electrical path extending from the adapter coupler 52 to the charging control IC 63. In response to a device coupled to the adapter coupler 52 delivering the electric power to the adapter coupler 52, the electric power is delivered to the charging control IC 63.

The charging control IC 63 at least achieves the function of the sink, among the roles of the source and the sink in the USB-PD. The source delivers electric power to other USB devices. The sink receives a supply of electric power from other USB devices. The charging control IC 63 activates in response to receiving the second electric power PW2 through the adapter coupler 52. Since the charging control IC 63 activates before the negotiation, the power-supply voltage of the charging adapter 5 at the time is a default value. The charging control IC 63 determines whether to operate as the source or the sink based on the setting of the CC terminal of the adapter coupler 52 (in detail, the USB Type-C connector). Here, the charging control IC 63 operates as the sink that receives the electric power supply. The charging control IC 63 performs the negotiation with the power delivery control IC 36 of the power delivery adapter 3 through the adapter coupler 52. The power-supply voltage of the charging adapter 5 is switched to a voltage corresponding to the supply power determined by the negotiation. The charging control IC 63 turns on the first SW 61 or the second SW 62 in accordance with the result of the negotiation and notifies the MCU 68 of the result of the negotiation.

The control power supply 64 activates in response to receiving the second electric power PW2 through the first power delivery path L1 or the second power delivery path L2. The control power supply 64 converts the DC voltage of the second electric power PW2 into an operating voltage Vd of the MCU 68 and delivers the electric power to the MCU 68. The operating voltage Vd of the MCU 68 corresponds to a voltage required for the MCU 68 to operate. The operating voltage Vd may be 5 volts, for example. That is, the control power supply 64 converts the DC voltage of the second electric power PW2 into the operating voltage Vd to be delivered to the inside of the charging adapter 5.

The first BTIF 70 receives battery information through a communication with the battery pack 8 coupled to the battery coupler 53. The battery information includes a specification of the battery pack 8, a state of the battery pack 8, and the like. The first BTIF 70 transfers the battery information to the MCU 68. The first BTIF 70 is configured to monitor the state of the battery pack 8. The first BTIF 70 may include a protection function to forcibly turn off the LDSW 69 in response to receiving the battery information indicating the anomaly of the battery pack 8.

The MCU 68 activates in response to receiving the power supply from the control power supply 64. The MCU 68 obtains various information from the charging control IC 63 and the first BTIF 70. The MCU 68 controls various parts of the charging adapter 5 in accordance with the information obtained. The MCU 68 informs the user of the state of the charger 1, the state of the battery pack 8 that is being charged, and the like through the notifier 54 in accordance with the information obtained.

The MCU 68 in the first embodiment is in the form of a microcontroller with a microcomputer. The MCU 68 includes a CPU 681 and a memory 682. In another embodiment, the MCU 68 may include, in place of or in addition to the microcomputer, a combination of electronic components such as discrete devices, may include an ASIC, may include an ASSP, may include a programmable logic device such as FPGA, or may include a combination thereof.

The memory 682 includes a semiconductor memory including a volatile memory and a non-volatile memory. The CPU 681 executes various programs stored in the memory 682 to thereby perform various processes.

The MCU 68 calculates the charging setting information Si including the control value Pc of the second electric power PW2 in response to the state of the battery pack 8. The control value Pc includes a setting value Pa for the voltage value and/or the electric current value of the second electric power PW2. In other words, the setting value Pa indicates a magnitude of the DC voltage to be output from the power delivery adapter 3 and/or a magnitude of the DC current to be output from the power delivery adapter 3. The charging control IC 63 transmits, to the power delivery adapter 3, the charging setting information Si received from the MCU 68.

### 2-1-4. Battery Pack

The battery pack 8 includes a second BTIF 81, a cell unit 83, and a pack coupler 85.

The second BTIF 81 transmits the battery information to the first BTIF 70 through a communication with the first BTIF 70 of the charging adapter 5. The second BTIF 81 is configured to detect the state of the battery pack 8. The state includes a charged state of the battery pack 8, an anomalous state of the battery pack 8, and the like.

The cell unit 83 includes a first battery cell 83a and a second battery cell 83b. The first battery cell 83a and the second battery cell 83b include rechargeable batteries that can be charged and discharged. The first battery cell 83a and the second battery cell 83b are coupled in series or in parallel with each other. The battery pack 8 is not limited to the configuration with two battery cells, but may include three or more battery cells. When the battery pack 8 includes three or more battery cells, the battery pack 8 may be configured with both a cell serial section and a cell parallel section. The cell serial section is a section in which two or more battery cells are coupled in series with each other. The cell parallel section is a section in which at least one battery cell is coupled in parallel with other battery cells.

The pack coupler 85 is configured to be detachably coupled to the charger 1 (in detail, to the charging adapter 5, in more detail, to the battery coupler 53). The pack coupler 85 is configured to receive the second electric power PW2 from the charger 1 when the cell unit 83 is charged. The pack coupler 85 is configured to output the discharging power from the cell unit 83 when the cell unit 83 discharges.

The pack coupler 85 includes a first pack terminal 85a and a second pack terminal 85b. The first pack terminal 85a is electrically coupled to the cell unit 83. The second pack terminal 85b is electrically coupled to the second BTIF 81. In response to the pack coupler 85 being coupled to the battery coupler 53, the first pack terminal 85a is electrically coupled to the first connection terminal 53a and the second pack terminal 85b is electrically coupled to the second connection terminal 53b.

The second pack terminal 85b is configured to transmit the information of the battery pack 8 to a job-site electric appliance in response to the battery pack 8 coupled to the job-site electric appliance (not shown). In detail, the second BTIF 81 performs a communication process with the job-site electric appliance to thereby transmit the information of the battery pack 8 through the second pack terminal 85b.

Note that the transmission of the information through the second pack terminal 85b may include the transmission through digital communication and the transmission through analog communication. The digital communication includes serial communication and parallel communication. In the digital communication, a digital value representing the information of the battery pack 8 is transmitted based on a specified communication protocol. In the analog communication, an analog value representing the information of the battery pack 8 is transmitted. The analog value may include a voltage value and an electric current value. For example, a thermistor configured to detect the temperature of the battery pack 8 may be used, and the value of a detected voltage generated across the thermistor may be used as the analog value representing the information of the battery pack 8. Specifically, the battery pack 8 may include the thermistor and the job-site electric appliance may include a pull-up resistor to form a circuit from a reference voltage line through the pull-up resistor and the thermistor to a ground line, thereby generating a detected voltage at a coupling point between the pull-up resistor and the thermistor. In this case, the information of the battery pack 8 is transmitted to the job-site electric appliance by a microcomputer provided in the job-site electric appliance receiving the value (analog value) of the detected voltage.

### 2-1-5. Charging Process

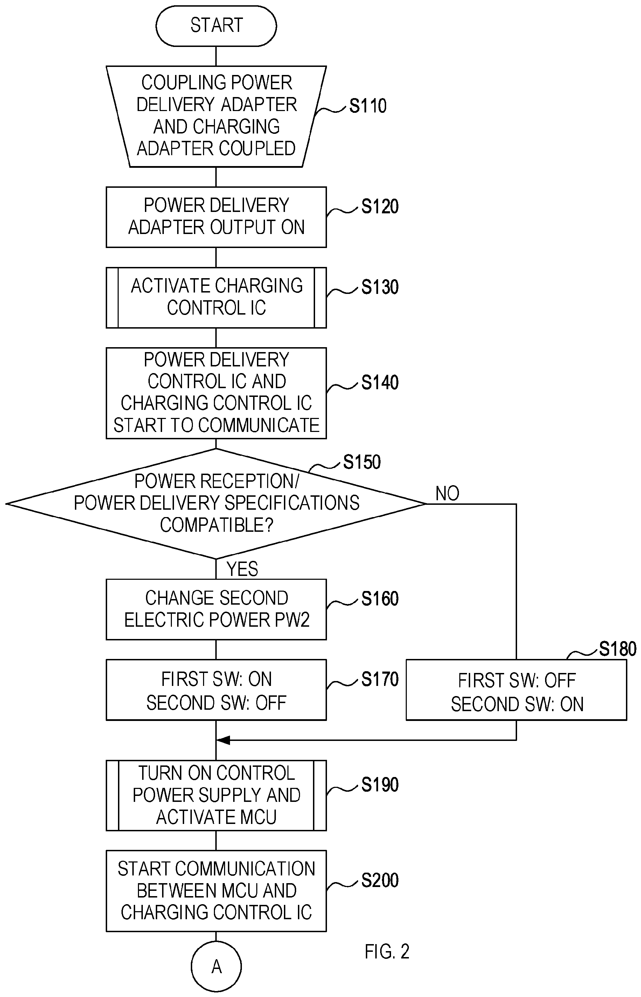

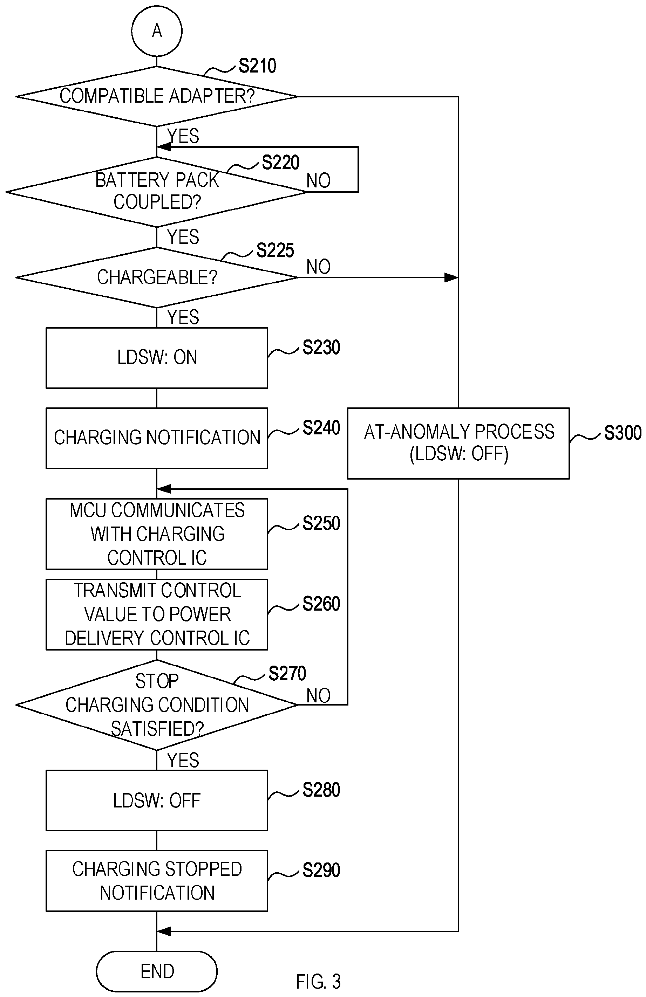

Then, a charging process for charging the battery pack 8 using the charger 1 (in detail, the power delivery adapter 3 and the charging adapter 5) is illustrated using the flowcharts of FIGS. 2 and 3.

First, in S110 (S represents a step), the power delivery adapter 3 and the charging adapter 5 are coupled by the user. In detail, the electric power outputter 33 and the adapter coupler 52 are coupled.

In the next S120, the power delivery adapter 3 initiates outputting the second electric power PW2 from the electric power outputter 33. That is, in response to the power delivery adapter 3 being coupled to the charging adapter 5, the power delivery adapter 3 outputs the second electric power PW2 to the charging adapter 5. At this time, since the negotiation between the power delivery adapter 3 and the charging adapter 5 (in detail, between the power delivery control IC 36 and the charging control IC 63) has not been performed, the voltage value of the second electric power PW2 is set to a default value. In the first embodiment, the default value is 5 volts.

In the next S130, the charging control IC 63 activates in response to the charging adapter 5 receiving the second electric power PW2. That is, the charging control IC 63 activates in response to receiving the second electric power PW2 from the power delivery adapter 3 through the third power delivery path L3. Each of the first SW 61, the second SW 62, and the LDSW 69 is in its OFF-state (its interrupted state) immediately after the activation of the charging control IC 63.

In the next S140, the power delivery control IC 36 and the charging control IC 63 start to communicate with each other. First, the power delivery control IC 36 and the charging control IC 63 perform the negotiation between each other in accordance with the USB-PD standard. The power delivery control IC 36 checks the CC terminal of the electric power outputter 33 to thereby confirm a power reception specification/power delivery specification of the power delivery adapter 3. The charging control IC 63 checks the CC terminal of the adapter coupler 52 to thereby confirm the power reception specification/power delivery specification of the charging adapter 5. That is, it is confirmed that which of the power delivery adapter 3 and the charging adapter 5 functions as the source to deliver the electric power and which of them functions as the sink to receive the supply of the electric power. In the first embodiment, the power delivery control IC 36 achieves the function of the source side, and the charging control IC 63 achieves the function of the sink side.

In the next S150, the power delivery control IC 36 and the charging control IC 63 determine whether the specifications of the power delivery control IC 36 and the charging control IC 63 are compatible with each other. The power delivery control IC 36 and the charging control IC 63 proceed to S160 if their specifications are compatible with each other (YES), and proceed to S180 if their specifications are incompatible with each other (NO). For example, when the power delivery adapter 3 and the charging adapter 5 both attempt to operate as the source or the sink, the power delivery control IC 36 and the charging control IC 63 determine that their specifications are incompatible. When the power delivery adapter 3 cannot meet the required power of the charging adapter 5 as a result of the negotiation, the charging control IC 63 determines that their specifications are incompatible. That is, the charging control IC 63 determines whether the power delivery adapter 3 is compatible with the charging adapter 5.

In the next S160, the power delivery control IC 36 and the charging control IC 63 vary the second electric power PW2 in accordance with the result of the negotiation. Specifically, the power delivery control IC 36 and the charging control IC 63 set the voltage value of the second electric power PW2 to correspond to a power-supply voltage value of the charging adapter 5.

In S170, the charging control IC 63 switches the first SW 61 to ON. Furthermore, the charging control IC 63 switches the second SW 62 to OFF. That is, the charging control IC 63 starts to deliver the second electric power PW2 to the control power supply 64 and the LDSW 69 through the first power delivery path L1.

In S180, the charging control IC 63 switches the second SW 62 to ON. Furthermore, the charging control IC 63 switches the first SW 61 to OFF. That is, the charging control IC 63 initiates to deliver the second electric power PW2 to the control power supply 64 through the second power delivery path L2.

In the subsequent S190, the MCU 68 activates in response to the second electric power PW2 being delivered to the control power supply 64.

In the subsequent S200, communication between the MCU 68 and the charging control IC 63 is initiated.

In the subsequent S210, the MCU 68 determines whether the power delivery adapter 3 coupled to the adapter coupler 52 is compatible with the charging adapter 5. If the power delivery adapter 3 is compatible with the charging adapter 5 (YES), the MCU 68 proceeds to S220, and proceeds to S300 if the power delivery adapter 3 is incompatible with the charging adapter 5 (NO).

In S220, the MCU 68 determines whether the battery pack 8 is coupled to the battery coupler 53 through the first BTIF 70. The MCU 68 proceeds to S225 in response to the battery pack 8 being coupled to the battery coupler 53 (YES). In response to the battery pack 8 not being coupled to the battery coupler 53 (NO), the MCU 68 waits while repeating the same step.

In S225, the MCU 68 determines whether the battery pack 8 is chargeable by the power delivery adapter 3. The MCU 68 proceeds to S230 if it is chargeable (YES), and proceeds to S300 if it is unchargeable (NO). The MCU 68 determines whether the battery pack 8 is chargeable by comparing the electric power that can be delivered by the power delivery adapter 3 and the electric power required for charging the battery pack 8. In other words, the MCU 68 determines whether the power delivery adapter 3 is suitable for charging the battery pack 8. Note that the electric power that can be delivered by the power delivery adapter 3 may be determined by a voltage that can be output. The determination as to "whether the battery pack 8 is chargeable" in S225 may be determined based on whether the battery pack 8 is in its proper state or in its failure state. If the battery pack 8 is in its proper state, a positive determination (YES) may be made, and if the battery pack 8 is in its failure state, a negative determination (NO) may be made. The failure state at this time means a non-recoverable failure state. The non-recoverable failure state includes, for example, a disconnection failure within the battery pack 8, and the like. A temporary anomalous state, such as a high temperature anomaly in the battery pack 8, is not included in the non-recoverable failure state, because the recovery to the proper state is possible over time.

If the battery pack 8 is in the temporary anomalous state at the time of the determination in S225, the MCU 68 may wait until the temporary anomalous state is solved after the positive determination in S225 and before proceeding to S230 (i.e., before starting to charge the battery pack 8). For example, an anomaly determination step may be executed after the positive determination in S225 to determine whether the battery pack 8 is in the temporary anomalous state. In this anomaly determination step, if the battery pack 8 is in the temporary anomalous state, the MCU 68 may wait until the temporary anomalous state is solved by repeatedly executing this step, and if the battery pack 8 is not in the temporary anomalous state, the MCU 68 may proceed to S230. That is, when the battery pack 8 has an anomalous high temperature, the MCU 68 may wait, after the positive determination in S225, until the temperature of the battery pack 8 decreases to a proper range by repeating the negative determination in the anomaly determination step, and may proceed to S230 when the temperature of the battery pack 8 decreases to the proper range. When the battery pack 8 has the anomalous high temperature, the battery pack 8 may be actively cooled by a cooling fan or the like.

In S230, the MCU 68 switches the LDSW 69 to ON. This causes the charging adapter 5 to output the second electric power PW2 from the battery coupler 53. By delivering the second electric power PW2 to the battery pack 8 in this way, the charging of the battery pack 8 is initiated.

In the subsequent S240, the MCU 68 controls the notifier 54 to inform that the battery pack 8 is being charged. The notifier 54 may include, for example, a liquid crystal panel, an LED lamp, a speaker, a buzzer, or the like. The notification may be in the form of a text display, a lamp lighting, a voice notification, a sound output, or the like. For example, the notifier 54 may display a text "charging". Notifying that the battery pack 8 is being charged enables to also notify that the device (the power delivery adapter 3) coupled to the adapter coupler 52 is compatible with the charging adapter 5.

In S300, the MCU 68 executes an at-anomaly process. The at-anomaly process includes an anomaly alert process and a self-cessation process. The MCU 68 controls the notifier 54 so as to alarm an anomaly by executing the anomaly alert process. For example, the notifier 54 may display a text "anomaly". The "anomaly" here includes at least one of the incompatibility of the power delivery adapter or the incompatibility of the battery pack depending on the determination made in S210 or S225. The incompatibility of the power delivery adapter means that the device (the power delivery adapter 3) coupled to the adapter coupler 52 is not compatible with the charging adapter 5. The incompatibility of the battery pack means that the battery pack 8 coupled to the battery coupler 53 is not compatible with the charging adapter 5. In other words, the incompatibility of the battery pack also means that the battery pack 8 is not compatible with the second electric power PW2 output from the power delivery adapter 3.

In S300, the MCU 68 may further switch the LDSW 69 to OFF.

The MCU 68 sets the DC voltage output by the power delivery adapter 3 to the minimum DC voltage (hereinafter, also referred to as "adapter minimum voltage Vamin") selectable in the power delivery adapter 3 by executing the self-cessation process. In detail, the MCU 68 calculates the charging setting information Si including the control value Pc that indicates the adapter minimum voltage Vamin, and transmits the charging setting information Si to the charging control IC 63. The charging control IC 63 transmits the charging setting information Si to the power delivery control IC 36. That is, the charging adapter 5 transmits, to the power delivery adapter 3, the control value Pc indicating the adapter minimum voltage Vamin. This causes the power delivery adapter 3 to output, to the charging adapter 5, the DC voltage corresponding to the adapter minimum voltage Vamin.

In the first embodiment, the minimum DC voltage selectable in the power delivery adapter 3 is 3.3 volts. The minimum operating voltage of the MCU 68 in the charging adapter 5 is 5.0 volts. Therefore, in response to the MCU 68 executing the self-cessation process, the DC voltage output by the power delivery adapter 3 (i.e., 3.3 volts) falls below the minimum operating voltage of the MCU 68 (i.e., 5.0 volts), making the MCU 68 inoperative. That is, the MCU 68 transitions the MCU 68 itself to its inoperative state by executing the self-cessation process. This enables to reduce an anomalous operation of the MCU 68, thereby inhibiting the charging of the battery pack 8 that is incompatible with the power delivery adapter 3.

Furthermore, with respect to the battery cells provided in the battery pack 8, when one battery cell has its maximum charging voltage greater than the adapter minimum voltage Vamin, the overcharge of the battery pack 8 can be inhibited by MCU 68 executing the self-cessation process. For example, when the maximum charging voltage of one battery cell is 4.2 volts and the adapter minimum voltage Vamin is 3.3 volts, the voltage value output by the charging adapter 5 to the battery pack 8 falls below the maximum charging voltage of one battery cell after the execution of the self-cessation process. Thus, even if the battery pack 8 is charged by the power delivery adapter 3 and the charging adapter 5 for some reason, only the DC voltage lower than the maximum charging voltage of one battery cell is applied, thereby inhibiting the overcharge of the battery pack 8.

In S250 following S240, the MCU 68 communicates with the charging control IC 63. First, the MCU 68 obtains the battery information of the battery pack 8 through the first BTIF 70. The MCU 68 determines the charged state of the battery pack 8 based on the battery information, and determines an appropriate charging power suitable for charging the battery pack 8 in the charged state. The appropriate charging power includes an appropriate charging voltage value and an appropriate charging current. The MCU 68 transmits, to the charging control IC 63, the charging setting information Si including the control value Pc of the appropriate charging power.

In the subsequent S260, the charging control IC 63 communicates with the power delivery control IC 36. The charging control IC 63 transmits the charging setting information Si to the power delivery control IC 36. In this way, the charging adapter 5 transmits, to the power delivery adapter 3, the control value Pc including the appropriate charging power.

In the subsequent S270, the MCU 68 determines whether a stop charging condition of the battery pack 8 is satisfied. First, the MCU 68 obtains the battery information of the battery pack 8 through the first BTIF 70. The MCU 68 determines whether the stop charging condition of the battery pack 8 is satisfied based on the battery information. Upon determination that the stop charging condition is satisfied (YES), the MCU 68 proceeds to S280 and upon determination that the stop charging condition is not completed (NO), it proceeds to S250 again.

The stop charging condition may be satisfied, for example, based on the battery pack 8 having been charged to 100% of a charging capacity of the battery pack 8. The stop charging condition may be satisfied based on the battery pack 8 being in its unchargeable anomalous state. The stop charging condition may be satisfied based on the battery pack 8 not being coupled to the battery coupler 53.

Note that the charging capacity is a value corresponding to a specified percentage of a rated capacity of the battery pack 8. The rated capacity of the battery pack 8 corresponds to the electric energy that can be stored in the battery pack 8 in its unused state (i.e., in a state where the battery cells of the battery pack 8 are not degraded). The battery pack 8 is degraded by repeated charging and discharging. The charging capacity corresponds to the electric energy that can be stored in the battery pack 8, and varies depending on the degraded state of the battery pack 8. The charging capacity is set to a value equal to or less than the rated capacity. For example, in the battery pack 8 with its rated capacity of 5.0 ampere-hours, the charging capacity may be set to 4.9 ampere-hours. In order to ensure a large number of permissible charge/discharge cycles until the battery pack 8 reaches the end of its life, the charging capacity may be set to a lower value. The permissible charge/discharge cycle is a cumulative number of charge/discharge cycles of the battery pack 8, and corresponds to the upper limit of the cumulative number of cycles within which the battery pack 8 can operate properly. The charging capacity may be changed based on the cumulative number of charge/discharge cycles. For example, if the cumulative number of charge/discharge cycles exceeds a specified reference value, the charging capacity may be changed to a lower value.

If it is determined that the battery pack 8 is in its anomalous state in S270, a process similar to the anomaly alert process may be executed in the steps executed thereafter.

The charger 1 repeatedly executes the processes of S250 and S260, whereby the MCU 68 varies the charging setting information Si in response to (i) the charging adapter 5 delivering the DC voltage of the second electric power PW2 to the battery pack 8 and (ii) the state of the battery pack 8 having changed. Furthermore, the charging control IC 63 transmits the charging setting information Si to the power delivery control IC 36 through the adapter coupler 52, thereby transmitting, to the power delivery control IC 36, the control value Pc including the appropriate charging power.

In S280, the MCU 68 switches the LDSW 69 to OFF. This causes the charging adapter 5 to stop outputting the second electric power PW2 from the battery coupler 53. In this way, the supply of the second electric power PW2 to the battery pack 8 is stopped, whereby the charging of the battery pack 8 is terminated.

Alternatively, in S280, the charging control IC 63 and the MCU 68 may calculate the charging setting information Si to set the DC voltage of the second electric power PW2 to a default value, and may transmit the charging setting information Si to the power delivery control IC 36. In response to the charging control IC 63 transmitting this charging setting information Si to the power delivery control IC 36 through the adapter coupler 52, the power delivery control IC 36 controls the DC voltage of the second electric power PW2 to the default value. This allows the charger 1 to control the DC voltage of the second electric power PW2 to a first voltage V1 to thereby reduce unnecessary power consumption. The first voltage V1 corresponds to a higher voltage value between a first minimum voltage Vmin1 and the adapter minimum voltage Vamin. The first minimum voltage Vmin1 corresponds to the minimum operating voltage of the MCU 68. The adapter minimum voltage Vamin corresponds to the minimum DC voltage selectable in the power delivery adapter 3 as described above. For example, when the first minimum voltage Vmin1 is 5.0 volts and the adapter minimum voltage Vamin is 3.3 volts, the value of the first voltage V1 corresponds to the value of the first minimum voltage Vmin1 (i.e., 5.0 volts).

Alternatively, in S280, the charging control IC 63 and the MCU 68 may transmit, to the power delivery control IC 36 through the adapter coupler 52, a request signal requesting to stop delivering the second electric power PW2. In response to receiving this request signal, the power delivery adapter 3 stops delivering the second electric power PW2 to the charging adapter 5. As a result, the charger 1 stops charging the battery pack 8.

In S290, the MCU 68 controls the notifier 54 so as to inform that the charging of the battery pack 8 is stopped. For example, the notifier 54 may display a text "charging stopped". Alternatively, when the charging is completed to 100% of the charging capacity of the battery pack 8, the notifier 54 may display a text "charging completed". When the battery pack 8 is in its anomalous state, the notifier 54 may display a text "battery pack anomaly".

The charger 1 terminates the charging process upon completion of the process of S290 or S300.

### 2-1-6. Effects

The first embodiment detailed above exhibits the following first through eighth effects.
- First effect: In the charger 1, the charging adapter 5 monitors the state of the battery pack 8, and transmits, to the power delivery adapter 3, the charging setting information Si including the control value Pc that correspondes to the state. Therefore, the charging adapter 5 can vary the second electric power PW2 (in detail, the voltage value and/or the electric current value of the second electric power PW2) to be output from the power delivery adapter 3 in accordance with the state.

As a result, the charging adapter 5 can output the second electric power PW2 having a voltage value and/or an electric current value required for the respective two or more types of battery packs 8 having distinct voltage values and/or distinct electric current values required for charging. Therefore, the charging adapter 5 can charge the two or more types of battery packs 8 even if the two or more types of battery packs 8 each has a distinct voltage value and/or a distinct electric current value required for charging. The charging adapter 5 can vary the voltage value and/or the electric current value of the second electric power PW2 in accordance with the change in the state of the battery pack 8 from the start of charging to the completion of charging, thereby achieving an appropriate charging control using the second electric power PW2 in accordance with the change in the state of the battery pack 8.
- Second effect: The charging adapter 5 includes the LDSW 69 and the MCU 68 to thereby stop an output of the second electric power PW2 in response to the power delivery adapter 3 that is not suitable for charging the battery pack 8 being coupled to the charging adapter 5. That is, the charging adapter 5 can inhibit the battery pack 8 from being charged by the power delivery adapter 3 that is not suitable for charging the battery pack 8. This allows the charging adapter 5 to inhibit the battery pack 8 from being damaged by electric power delivered from the power delivery adapter 3 that is not suitable for charging.
- Third effect: When the power delivery adapter 3 is compatible with the charging adapter 5, the charging adapter 5 delivers the second electric power PW2 to the LDSW 69 and to the control power supply 64. When the power delivery adapter 3 is incompatible with the charging adapter 5, the charging adapter 5 does not deliver the second electric power PW2 to the LDSW 69, but delivers the second electric power PW2 to the control power supply 64. This allows the charging adapter 5 to deliver the electric power to the inside of the charging adapter 5 by the control power supply 64 while reducing damage to the charging adapter 5 caused by the improper second electric power PW2.
- Fourth effect: The charging adapter 5 can vary the second electric power PW2 to be delivered to the battery pack 8 in accordance with the state of the battery pack 8. This allows the charging adapter 5 to charge the battery pack 8 appropriately while reducing a load on the battery pack 8 compared to the case of delivering a fixed electric energy to the battery pack 8. Furthermore, the charging adapter 5 can reduce unnecessary power consumption at the time of charging the battery pack 8 by controlling the voltage value of the second electric power PW2 within an appropriate range.
- Fifth effect: In the charging adapter 5, the MCU 68 stops outputting the second electric power PW2 to the battery pack 8 in response to the stop charging condition being satisfied. This allows the charging adapter 5 to inhibit the battery pack 8 from being damaged due to a continuous output of the second electric power PW2 to the battery pack 8.
- Sixth effect: In the charger 1, the power delivery adapter 3 can output the second electric power PW2 that is set in accordance with the charging setting information Si from the charging adapter 5. Thus, the charger 1 can achieve the appropriate charging control using the second electric power PW2 in accordance with the change in the state of the battery pack 8.
- Seventh effect: In the charger 1, the charging adapter 5 delivers the DC voltage of the second electric power PW2 received at the adapter coupler 52 to the battery pack 8 without conversion, and therefore, a voltage converter is unnecessary. As a result, the charging adapter of the present disclosure can reduce the number of components compared to a configuration with a voltage converter, thereby achieving cost reduction. In addition, the charging adapter of the present disclosure can be downsized by reducing the number of components.
- Eighth effect: In the charger 1, the power delivery adapter 3 and the charging adapter 5 are coupled to each other through the USB Type-C connector, and therefore, it is possible to control the DC voltage of the second electric power PW2 of the power delivery adapter 3 in accordance with the USB-PD standard.

### 2-1-7. Correspondence between Terms

In the first embodiment, the adapter coupler 52 corresponds to an example of the first coupler in the overview of embodiments, and the battery coupler 53 corresponds to an example of the second coupler in the overview of embodiments, and the first power delivery path L1 corresponds to an example of the power delivery path in the overview of embodiments. The first BTIF 70 corresponds to an example of the state monitoring circuit in the overview of embodiments, the MCU 68 corresponds to an example of the arithmetic circuit in the overview of embodiments, and the charging control IC 63 corresponds to an example of the transmission circuit in the overview of embodiments. The charging setting information Si corresponds to an example of the control parameter in the overview of embodiments.

The LDSW 69 corresponds to an example of the path switch in the overview of embodiments, and the MCU 68 corresponds to an example of the switching control circuit in the overview of embodiments. The charging control IC 63 corresponds to an example of the starter circuit in the overview of embodiments. The electrical path extending from the node P1 to the control power supply 64 on the first power delivery path L1 corresponds to an example of the first internal path in the overview of embodiments, and the second power delivery path L2 corresponds to an example of the second internal path in the overview of embodiments. The stop charging condition in S270 corresponds to an example of the first condition in the overview of embodiments.

The power delivery control IC 36 corresponds to an example of the power delivery control circuit in the overview of embodiments, and the AC/DC converter 35 corresponds to an example of the voltage generation circuit in the overview of embodiments. The second pack terminal 85b corresponds to an example of the output terminal in the overview of embodiments. The determination conditions in S210 and S225 correspond to examples of the second condition in the overview of embodiments.

### 2-2. Further embodiments

Although the embodiment of the present disclosure has been described above, it should be appreciated that the present disclosure is not limited to the first embodiment, and can be embodied in various forms.

In the first embodiment, a configuration has been described in which the power delivery adapter 3 includes the USB Type-C connector. However, the power delivery adapter of the present disclosure is not limited to such a configuration. The power delivery adapter of the present disclosure may be a DC power supply that does not include the USB Type-C connector. The DC power supply may be configured to output DC power including the DC voltage.

For example, the DC power supply may include other forms of output connectors instead of the USB Type-C connector in the power delivery adapter 3. When the power delivery adapter is a DC power supply with an output connector, the first coupler of the charging adapter (the adapter coupler 52 in the above embodiment) may be configured to be detachably coupled to the output connector. The DC power supply may include an integrated circuit for power supply control (hereinafter, also referred to as "power supply control IC") instead of the power delivery control IC 36 in the power delivery adapter 3. The arithmetic portion of the charging adapter (e.g., the charging control IC 63) may be configured to communicate with the power supply control IC of the DC power supply.

In the first embodiment, a configuration has been described in which the charging adapter 5 notifies an alert such that the incompatibility of the power delivery adapter and the incompatibility of the battery pack are not distinguished as a form of the anomaly alert process (S300) of the at-anomaly process. However, the charging adapter of the present disclosure is not limited to such a configuration. The charging adapter of the present disclosure may be configured to notify an alert such that the incompatibility of the power delivery adapter and the incompatibility of the battery pack are distinguished. Anomalies may be distinguished and notified by displaying a text "incompatible power delivery adapter" or "incompatible battery pack", for example. The charging adapter of the present disclosure may notify anomalies other than these anomalies.

In the first embodiment, a configuration has been described in which the charging adapter 5 does not communicate with the power delivery adapter 3 when the charging of the battery pack 8 is completed (S270: YES). However, the charging adapter of the present disclosure is not limited to such a configuration. The charging adapter of the present disclosure may transmit, to a power delivery adapter, charging setting information including a control value of the electric power at the time of non-charging, upon completion of the charging of the battery pack. The electric power at the time of non-charging may correspond to the electric power required for the charging adapter to operate when the battery pack is not being charged. The voltage value of the electric power at the time of non-charging may be set to a default value. The default value may be the lowest voltage (e.g., 5 volts) of the selectable voltages defined in the USB-PD standard.

In order to achieve such a configuration in the first embodiment, the MCU 68 may transmit, to the charging control IC 63, a control value Pc including the electric power at the time of non-charging, upon completion of the charging of the battery pack 8. Subsequently, the charging control IC 63 may transmit, to the power delivery control IC 36, the charging setting information Si including the control value Pc. That is, when the charging of the battery pack 8 is completed, the charging adapter 5 may transmit, to the power delivery adapter 3, the charging setting information Si including the electric power at the time of non-charging.

Two or more functions of one element in the embodiments may be achieved by two or more elements, and one function of one element may be achieved by two or more elements. Furthermore, two or more functions of two or more elements may be achieved by one element, and one function achieved by two or more elements may be achieved by one element. A part of the configurations of the aforementioned embodiments may be omitted. Furthermore, at least a part of the configurations of the aforementioned embodiments may be added to or replaced with another configuration of the above-described embodiments.

## Claims

1. A charging adapter comprising:
a first coupler configured to be detachably coupled to a power delivery adapter, the power delivery adapter being configured to output a DC voltage;
a second coupler configured to be detachably coupled to a battery pack, the battery pack being configured to be detachably coupled to a job-site electric appliance;
a power delivery path configured to electrically couple the first coupler to the second coupler;
an arithmetic circuit configured to calculate a control parameter of the power delivery adapter based on a state of the battery pack coupled to the second coupler; and
a transmission circuit configured to transmit the control parameter calculated to the power delivery adapter through the first coupler.

2. The charging adapter according to claim 1,
wherein the control parameter indicates a magnitude of the DC voltage and/or a magnitude of a current to be output from the power delivery adapter.

3. The charging adapter according to claim 1 or 2, comprising:
a path switch (i) on the power delivery path and (ii) configured to be switched to its conductive state or its interrupted state, the path switch in its conductive state being configured to complete the power delivery path, and the path switch in its interrupted state being configured to interrupt the power delivery path; and
a switching control circuit configured (i) to switch the path switch to its conductive state based on the power delivery adapter coupled to the first coupler being compatible with the battery pack coupled to the second coupler and (ii) to switch the path switch to its interrupted state based on the power delivery adapter coupled to the first coupler being incompatible with the battery pack coupled to the second coupler.

4. The charging adapter according to claim 3, comprising:
a control power supply configured to convert the DC voltage into an internal voltage to be delivered to an inside of the charging adapter;
a first switch (i) between the first coupler and the path switch on the power delivery path and (ii) configured to be switched between its conductive state or its interrupted state, the first switch in its conductive state being configured to complete the power delivery path, and the first switch in its interrupted state being configured to interrupt the power delivery path;
a first internal path configured to electrically couple the power delivery path to the control power supply, the first internal path being electrically coupled between the first switch and the path switch on the power delivery path;
a second internal path configured to electrically couple the first coupler to the control power supply;
a second switch (i) on the second internal path and (ii) configured to be switched to its conductive state or its interrupted state, the second switch in its conductive state being configured to complete the second internal path, and the second switch in its interrupted state being configured to interrupt the second internal path; and
a starter circuit configured to switch the first switch or the second switch to its conductive state based on the first coupler being coupled to the power supply adapter.

5. The charging adapter according to claim 4,
wherein the starter circuit is configured to:
switch the first switch to its conductive state and switch the second switch to its interrupted state based on the power delivery adapter being compatible with the charging adapter; and
switch the first switch to its interrupted state and switch the second switch to its conductive state based on the power delivery adapter being incompatible with the charging adapter.

6. The charging adapter according to any one of claims 3 through 5,
wherein the switching control circuit is configured to switch the path switch to its interrupted state based on a first condition being satisfied.

7. The charging adapter according to claim 6,
wherein the first condition is satisfied in response to (i) the battery pack having been charged to 100% of a charge capacity of the battery pack, (ii) the battery pack being unchargeable, or (iii) the battery pack not being coupled to the second coupler.

8. The charging adapter according to claim 6 or 7, wherein:
the power delivery adapter is configured to select a magnitude of the DC voltage;
the arithmetic circuit is configured to calculate the control parameter so as to maintain the DC voltage at a first voltage based on the first condition being satisfied; and
the first voltage corresponds to a minimum operating voltage of the arithmetic circuit or a minimum DC voltage selectable in the power delivery adapter.

9. The charging adapter according to claim 8,
wherein the first voltage corresponds to a higher voltage between the minimum operating voltage and the minimum DC voltage.

10. The charging adapter according to any one of claims 1 through 9,
wherein the arithmetic circuit is configured to vary the control parameter based on (i) the charging adapter delivering the DC voltage to the battery pack and (ii) the state of the battery pack having changed.

11. The charging adapter according to any one of claims 1 through 10,
wherein the first coupler is configured to receive the DC voltage in accordance with a USB-PD standard.

12. The charging adapter according to any one of claims 1 through 11,
wherein the first coupler is in the form of a USB Type-C connector configured to receive the DC voltage.

13. The charging adapter according to any one of claims 1 through 12,
wherein the battery pack includes an output terminal configured to transmit information on the battery pack to the job-site electric appliance coupled to the battery pack.

14. The charging adapter according to any one of claims 1 through 13, wherein:
the power delivery adapter is configured to select a magnitude of the DC voltage of the power delivery adapter;
the arithmetic circuit is configured to calculate, based on a second condition being satisfied, the control parameter so as to maintain the DC voltage at a minimum DC voltage selectable in the power delivery adapter;
the minimum DC voltage is lower than a minimum operating voltage of the arithmetic circuit; and
the second condition is satisfied in response to the power delivery adapter being incompatible with the charging adapter or the battery pack being unchargeable.

15. The charging adapter according to any one of claims 1 through 14, comprising
a state monitoring circuit configured to monitor the state of the battery pack.

16. The charging adapter according to any one of claims 1 through 15,
wherein the battery pack includes a first battery cell and a second battery cell coupled in series or in parallel with each other.

17. A charger comprising:
the charging adapter according to any one of claims 1 through 16; and
a power delivery adapter configured (i) to be detachably coupled to the charging adapter and (ii) to output the DC voltage corresponding to the control parameter transmitted from the charging adapter.

18. The charger according to claim 17,
wherein the power delivery adapter includes:
a voltage generation circuit configured to generate the DC voltage;
a power delivery control circuit configured (i) to receive the control parameter from the charging adapter and (ii) to control the voltage generation circuit so as to generate the DC voltage corresponding to the control parameter; and
a voltage output circuit configured (i) to be detachably coupled to the first coupler of the charging adapter and (ii) to output the DC voltage to the first coupler.

19. A method for charging a battery pack, the method comprising:
electrically coupling the battery pack to a power delivery adapter through a charging adapter, the battery pack being configured to be detachably coupled to a job-site electric appliance;
transmitting, from the charging adapter to the power delivery adapter, a control parameter based on a state of the battery pack; and
delivering, from the power delivery adapter through the charging adapter to the battery pack, a DC voltage based on the control parameter.
